# EUROPÄISCHE PATENTANMELDUNG

(11) **EP 0 731 323 A2**
(43) Veröffentlichungstag der Anmeldung: **11.09.1996**
(21) Anmeldenummer: 96102630.9
(22) Anmeldetag: 22.02.1996
(51) Int. Cl.: F25B 9/06, F25B 1/047

(54) **Verfahren zur Kälteerzeugung mit Luft als Kältemittel und als primärer Kälteträger**

(30) Priorität: 07.03.1995 DE 19507920
(71) Anmelder: Ingenieurbüro Dr. Förster, 39108 Magdeburg (DE)
(72) Erfinder: Förster, Hans, Dr., 39110 Magdeburg (DE); Leser, Wolfgang, 21266 Jesteburg/Lüllau (DE)
(74) Vertreter: Leinung, Günter

(57) **Zusammenfassung**

Das Verfahren arbeitet mit Luft (1) als Kältemittel und Kälteträger, einer isothermen Verdichtung über Schraubenverdichter (2) mit Wassereinspritzung, einer Luftentspannungsturbine (12), die nicht mit dem Verdichter (2) fest gekoppelt sein muß, sondern mit anderen Energieverbrauchern gekoppelt sein kann und mit Direktkühlung der komprimierten Luft unter 0 °C. Die Restkälte wird mit indirektem Wärmetausch zurückgewonnen und an einen umlaufenden sekundären Kälteträger übertragen, der nach Bedarf zusätzlich durch Fremdkälte gekühlt wird, wodurch die zu entspannende Luft praktisch trocken ist und Abweichungen der Entspannungsendtemperatur von der theoretischen Entspannungsendtemperatur für reine Luft unbedeutetend klein bleiben.

Das Verfahren ist für die Industriekälteversorgung in allen Branchen mit Kaltluftbedarf unter -30 °C anwendbar.

## Beschreibung

Gegenstand der Erfindung ist ein Verfahren zur Kälteerzeugung mit Luft als Kältemittel und als primärem Kälteträger bei weitgehend isothermer Verdichtung und adiabater, angenähert isentroper Entspannung, wobei für die Verdichtung ein an sich bekannter Schraubenverdichter mit Wassereinspritzung und für die Entspannung eine hochtourige Turbine verwendet wird und die Kühlung der komprimierten Luft unter 0°C in einem Direktkühler erfolgt. Das Verfahren ist überall einsetzbar, wo brennbare, giftige oder umweltbelastende Kältemittel keine Akzeptanz besitzen, wobei vorzugsweise Anwendungen unter -30 bis -160 °C bei gleitenden Temperaturen in Betracht kommen. Als typische Branchen für die Nutzung des Verfahrens sind nicht nur Schlachthöfe und Kühlhäuser zu nennen, sondern alle Anwendungen in denen gegenwärtig flüssiger Stickstoff als Kältemittel eingesetzt wird, z.B. auch Altgummi-Recycling.
Bekannt ist das Verfahren nach Patentschrift DE 4127224 A 1, mit dem Luft als Kältemittel und Kälteträger mit isothermer Verdichtung der Luft vorgeschlagen wird. Als Nachteile dieses vorgeschlagenen Verfahrens haben sich erwiesen:
- die Art der Rückgewinnung der Restkälte durch Direktwärmetausch zwischen primärem Kälteträger Luft und dem sekundären flüssigen Kälteträger bei niedrigem Druck, besonders wegen der Beladung der Reinluft durch flüchtige Kälteträger bei regenerativer Nutzung der Restkälte durch Direktwärmetausch, die größere Verdichter, höheren Energieverbrauch und zusätzliche Schritte für die Stofftrennung erfordert und den Einsatz leichtflüchtiger sekundärer Kälteträger für sehr tiefe Temperaturen nicht gestattet;
- die geringe Vorkühlung der komprimierten Luft vor der Entspannung, wenn das Kälteangebot durch Gegenstromführung zwischen Kühlgut und Kaltluft gut genutzt wird und damit nur wenig Restkälte für die Vorkühlung zur Verfügung steht, wodurch der Restdampfgehalt erst nach der Entspannung kondensiert bzw. sublimiert und einen Temperaturanstieg gegenüber der Entspannung von Reinluft nach der Turbine bewirkt;
- die feste Kopplung zwischen Verdichter und Turbine über ein Getriebe, das Verschleiß unterliegt und die getrennte Regelung von Verdichter und Turbine einschränkt oder erschwert;
- die Ausregelung von Leistungsspitzen, die zur Überdimensionierung der Anlage zwingen;
- die Einschränkung des Verfahrens auf sekundäre Kälteträger mit geringer Flüchtigkeit und dem Nachteil hoher Druckverhältnisse sowie geringer energetischer Effektivität bei anspruchsvollen Kälteparametern.

Der letztgenannte Nachteil bezieht sich z.B. auf Wasser-Salz-Mischungen oder Kälteträger auf Glykolbasis als sekundäre Kälteträger, die mit Direktwärmetausch zur Nutzung der Restkälte arbeiten können. Wegen der Kristallisationsgefahr sind solchen Kälteträgern enge Temperaturgrenzen gesetzt, so daß im Direktwärmetausch tiefe Temperaturen nur über die Erhöhung des Druckverhältnisses mit den erwähnten Nachteilen zum Energieverbrauch erreichbar sind.
Für tiefe Temperaturen bei mäßigen Druckverhältnissen sind organische sekundäre Kälteträger unverzichtbar, die wegen ihrer höheren Flüchtigkeit eine andere Gestaltung des Verfahrens verlangen.

Ein Kaltluft-Kälteverfahren mit wassereingespritzten Schraubenverdichtern wird auch in DD 31 39 398 vorgeschlagen. Durch Reihenschaltung mit adiabaten Verdichtern wird aber eine isotherme Verdichtung weit verfehlt und durch Verwendung von Oberflächenwärmeübertragern zur Vorkühlung der komprimierten Luft wird das bekannte Vereisungsproblem dieser Apparate aufgeworfen, was umschaltbare Apparate mit Abtaueinrichtungen verlangt.
In der Offenlegungsschrift DE 43 03 670 A1 wird im Zusammenhang mit der Abscheidung von organischen Dämpfen aus Luft und technischen Gasen die Verwendung von Direktwärmetauschern zur Vorkühlung der Gas-Dampf-Mischungen und zur Kondensation der Dämpfe vorgeschlagen, wobei die Verdichtung in allgemein bekannten Schraubenverdichtern mit Wassereinspritzung erfolgt.
Mit diesem Verfahren wird aber Kälte nicht freigesetzt, sondern verfahrensintern vollständig zur Kondensation der in beladenen Gasen enthaltenen Dämpfe verwendet. Demgemäß ist die weitere Verfahrensführung nicht vergleichbar mit einem Verfahren zur Erzeugung von Kälte, die für einen beliebigen Kälteverbraucher mit anspruchsvollen Parametern zur Verfügung gestellt werden kann.

Aufgabe der Erfindung ist es, ein Verfahren zur Kälteerzeugung mit Luft als Kältemittel und Kälteträger anzugeben, das auch mit flüchtigen sekundären Kälteträgern für sehr anspruchsvolle Kälteparameter bei mäßigen Druckverhältnissen und ohne Vergrößerung des Ansaugvolumens für den Verdichter arbeiten kann, bei großem Temperaturintervall für die Nutzung der Kaltluft die Nachteile der Kondensations- und Sublimationsvorgänge nach der Entspannung der Luft vermeidet, sich schnellen Leistungsspitzen anpaßt und gut anfahr- und regelbar ist.
Erfindungsgemäß wird das dadurch erreicht, daß
- die Restkälte der Kaltluft nach der Nutzkälteauskopplung bei niedrigem Druck mit indirekter Wärmeübertragung (durch eine feste Wandung) an den Kälteträger überfragen wird;
- die weitere maximale Vorkühlung des sekundären flüssigen Kälteträgers durch eine Fremdkältequelle, z.B. eine Kaltdampf-Kälteanlage erfolgt, die entfällt, wenn das Aufkommen an Restkälte hoch ist,
- ein Kälteträger-Kaltspeicher bedarfsweise den Spitzenbedarf an Kälte deckt und für minimale Anfahrzeit sorgt,
- für wasserunlösliche organische sekundäre Kälteträger eine Schwerkraftabscheidung des eingeschleppten Wassers und dessen Rückführung vorgesehen ist,
- bei wasserlöslichen Kälteträgern eine Auskreisung eines Teilstromes und dessen Aufarbeitung zu Reinwasser und einer wässrigen Phase mit Rückführung in die zugehörigen Systeme erfolgt,
- eine starre Verbindung zwischen Verdichter und Turbine über ein Getriebe nicht zwingend erforderlich ist und die Turbine unabhängig vom Verdichter mit einem Energieverbraucher arbeiten kann.

Die Vorteile des erfindungsgemäßen Verfahrens beruhen einmal auf der Möglichkeit, tiefsiedende und dann auch leichtflüchtige Stoffe als sekundärem Kälteträger für anspruchsvolle Kälteparameter (z.B. -160 °C) mit geringen Druckverhältnissen und ohne Volumenzunahme für den zu verdichtenden Gasstrom, also ohne erhöhte Energieverbräuche einsetzen zu können, wobei auch der Energieaufwand zur Abtrennung eingeschleppten Wassers gering oder unbedeutend bleibt.
Weitere Vorteile erhält man durch die Möglichkeit der Fremdkälteeinkopplung zur Vorkühlung des Kälteträgers (Erniedrigen des Druckverhältnisses), durch Kaltspeicherung des sekundären Kälteträgers für das Abfangen von Leistungsspitzen oder für beschleunigtes Anfahren sowie durch Fraktionierung organischer sekundärer Kälteträger sowie durch Auskreisung leichter Komponenten im Anschluß an die Entspannung.
Das Verfahren wird anhand von 3 schematischen Zeichnungen beschrieben.

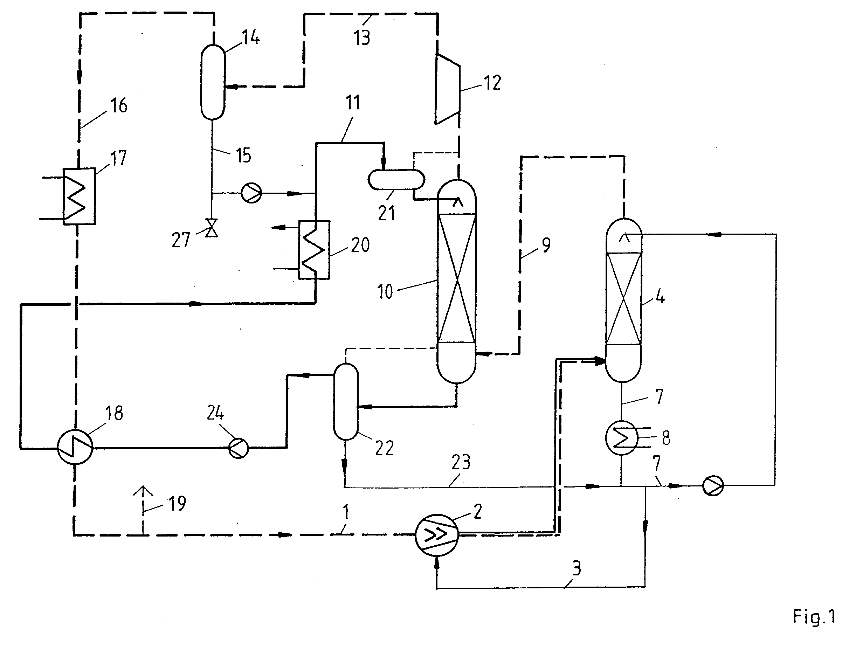

- Fig. 1: zeigt eine Ausführung für wasserunlösliche organische sekundäre Kälteträger mit Direktkühlung in zwei Kälteträgerkreisläufen nach der Verdichtung und Kaltspeicherung des Kälteträgers.

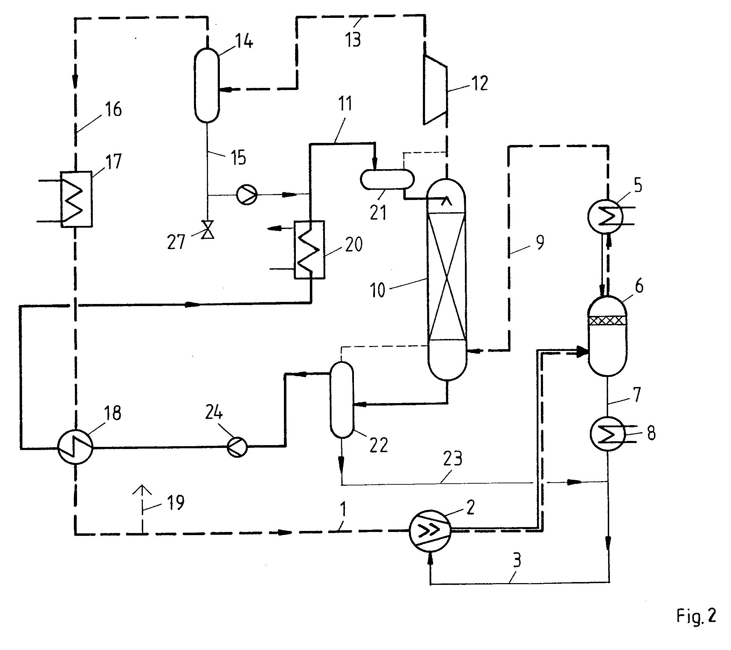

- Fig. 2: zeigt eine Ausführung für wasserunlösliche organische sekundäre Kälteträger mit indirekter Kühlung anstelle des ersten Kälteträgerkreislaufs nach der Verdichtung und Kaltspeicherung des Kälteträgers.

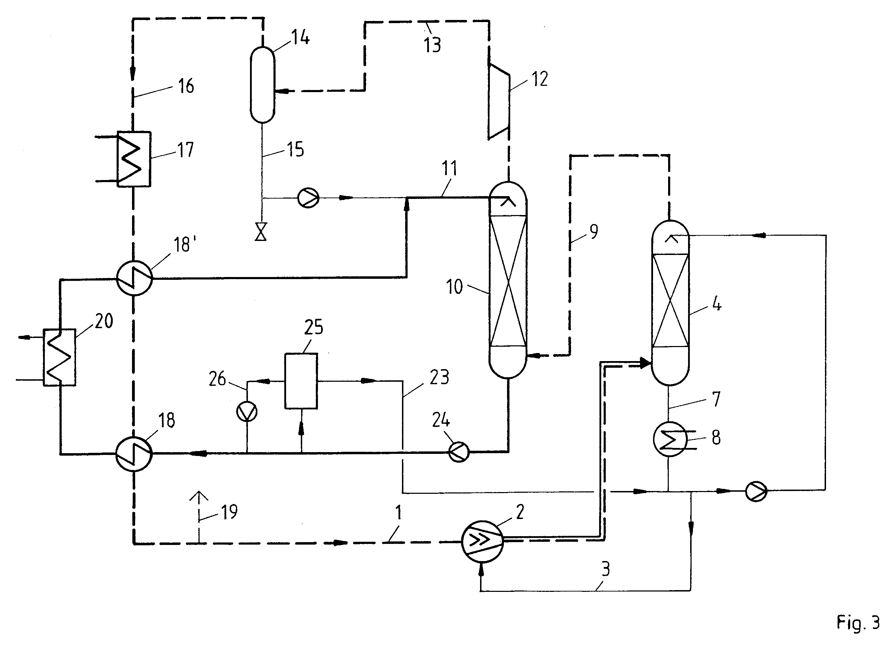

- Fig. 3: zeigt eine Ausführung für wasserlösliche sekundäre Kälteträger, mit Direktkühlung nach der Verdichtung und Reihen-Sprung-Schaltung für den inneren Wärmetausch und die Fremdkälteeinkopplung.

Die kursierende Luft 1 wird in einem Schraubenverdichter 2 mit Wassereinspritzung isotherm verdichtet und in einer Waschkolonne 4 als Direktkühler mit Wasser als erstem Kälteträger oder einem indirekten Kühler 5 nachgekühlt. Am Sumpf der Waschkolonne 4 oder des Abscheiders 6 wird das Kreislaufwasser 7 abgenommen, in einem Kühler 8 durch Kühlwasser zurückgekühlt, wobei eine definierte Menge als Einspritzwasser 3 zum Schraubenverdichter 2 zurückgeführt und, bei Direktkühlung, ein weiterer Strom zur Waschkolonne 4 geleitet wird.
Der vorgekühlte, komprimierte Luftstrom 9 wird in einer Kaltwäsche 10 durch einen zweiten flüssigen sekundären Kälteträger im Umlaufsystem 11 im Gegenstrom vorgekühlt und in einer Turbine 12 entspannt. Die entspannte Kaltluft 13 wird ggf. durch einen Kaltabscheider 14 geleitet, in dem sich Kondensate 15 abscheiden und ausgekreist oder in den Kälteträgerkreislauf zurückgeleitet werden. Die Kaltluft 16 gelangt in den Nutzkälte-Verbraucher 17 und die Restkälte der Kaltluft wird in Wärmeübertragern 18 und 18' an den flüssigen Kälteträger im Umlaufsystem 11 übertragen. Der Druckausgleich zum Umgebungsdruck wird mit einer Atmungsleitung 19 hergestellt.
Bei geringem Aufkommen an Restkälte kann die Einbindung einer Fremdkältequelle 20 zur maximalen Vorkühlung des zweiten Kälteträgers und zur Vermeidung von unerwünschten Kondensationen oder Sublimationen der Kaltluft 13 hinter der Turbine 12 nützlich sein. Als Fremdkältequelle kommt z.B. eine Kaltdampf-Kälteanlage in Betracht. Je nach Temperaturniveau der Restkälte kann die Fremdkältequelle 20 auch zwischen zwei Wärmeübertrager 18, 18' geschaltet werden.
Zur mühelosen Bewältigung von Leistungsspitzen und für den Schnellstart der Anlage dient ein Kälteträger-Kaltspeicher 21, der in das Kälteträger-Umlaufsystem 11 vor der Kaltwäsche 10 eingebunden ist.
Wenn der zweite sekundäre Kälteträger im Umlaufsystem 11 wasserunlöslich ist, erfolgt die Abscheidung und Auskreisung eingeschleppter Feuchtigkeit aus dem Kreislauf dieses Kälteträgers über einen Schwerkraftabscheider 22, wobei das abgeschiedene Wasser 23 in das Kreislaufwasser 7 des ersten Kälteträgers und der wasserfreie Kälteträger zur Kälteträgerpumpe 24 geleitet wird.
Wenn der zweite sekundäre Kälteträger im Umlaufsystem 11 wasserlöslich ist, erfolgt die Auskreisung eines Teilstroms, der in einer Trenneinrichtung 25 in Wasser 23 und einen wasserärmeren Strom des Kälteträgers 26 getrennt wird, wobei letzterer in das Umlaufsystem 11 des zweiten Kälteträgers zurückgeführt wird, während die Rückführung des abgeschiedenen Wassers 23 zum Kreislaufwasser 7 erfolgt.
Enthält der eingebrachte sekundäre Kälteträger zuviel leichtsiedende Komponenten, so können diese bei tiefen Temperaturen an der Entnahmestelle 27 entnommen und damit eine Korrektur des Siedeverhaltens des zweiten Kälteträgers durchgeführt werden.

### Bezugszeichenliste

- 1: Luft
- 2: Schraubenverdichter
- 3: Einspritzwasser
- 4: Waschkolonne
- 5, 8: Kühler
- 6: Abscheider
- 7: Kreislaufwasser
- 9: Luftstrom
- 10: Kaltwäsche
- 11: Kälteträger-Umlaufsystem
- 12: Turbine
- 13, 16: Kaltluft
- 14: Kaltabscheider
- 15: Kondensate
- 17: Nutzkälte-Verbraucher
- 18, 18': Wärmeübertrager
- 19: Atmungsleitung
- 20: Fremdkältequelle
- 21: Kälteträger-Kaltspeicher
- 22: Schwerkraftabscheider
- 23: Wasser
- 24: Kälteträgerpumpe
- 25: Trenneinrichtung
- 26: Kälteträger
- 27: Entnahmestelle

## Patentansprüche

1. Verfahren zur Kälteerzeugung mit Luft als Kältemittel und als primärem Kälteträger bei weitgehend isothermer Verdichtung und adiabater, angenähert isentroper Entspannung, wobei für die Verdichtung ein an sich bekannter Schraubenverdichter mit Wassereinspritzung und für die Entspannung eine hochtourige Turbine verwendet wird und die Kühlung der komprimierten Luft unter 0 °C in einem Direktkühler erfolgt, **dadurch gekennzeichnet**, daß die Kühlung der komprimierten Luft durch direkten Wärmetausch mit Kälteträgern in zwei Waschkolonnen erfolgt, die mit jeweils einem Kälteträger-Kreislauf betrieben werden, daß für die bei höherer Temperatur betriebene, erste Waschkolonne (4) Wasser als erster Kälteträger und für die bei tieferen Temperaturen betriebene Kaltwäsche (10) ein zweiter Kälteträger verwendet wird, in dessen Kreislauf ein Wärmeübertrager (18) zur Rückgewinnung der Restkälte und/oder eine Fremdkältequelle (20) sowie ein Kalteträger-Kaltspeicher (21) angeordnet sind, wobei der Wärmeübertrager (18) für Restkälte die dem Schraubenverdichter (2) zuzuführende Luft vorwärmt.

2. Verfahren nach Anspruch 1 **dadurch gekennzeichnet**, daß durch Auskreisung entspannter leichter Komponenten des zweiten sekundären Kälteträgers im Umlaufsystem (11) eine Fraktionierung erfolgt und damit das Siedeverhalten des zweiten Kälteträgers beeinflußt wird.

3. Verfahren nach Anspruch 1 und 2, **dadurch gekennzeichnet**, daß bei wasserunlöslichen Kälteträgern im Umlaufsystem (11) das eingeschleppte Wasser durch einen Schwerkraftabscheider (22) im Hauptstrom des zweiten Kälteträgers abgeschieden und in das Kreislaufwasser (7) zurückgespeist wird.

4. Verfahren nach Anspruch 1 bis 3, **dadurch gekennzeichnet**, daß bei wasserlöslichen Kälteträgern im Umlaufsystem (11) ein Teilstrom des Kälteträgers ausgekreist, in einer Trenneinrichtung (25) Wasser (23) abgeschieden und in das Kreislaufwasser (7) zurückgeführt wird, während der wasserärmere Kälteträger (26) in den zweiten Kälteträger eingespeist wird.

5. Verfahren nach Anspruch 1 bis 4, **dadurch gekennzeichnet**, daß die Fremdkälte durch eine Kaltdampf-Kälteanlage erzeugt wird.

6. Verfahren nach Anspruch 1 bis 5, **dadurch gekennzeichnet**, daß der Schraubenverdichter (2) und die Turbine (12) entkoppelt sind, wobei die Turbine (12) mit einem hochtourigen Energieverbraucher verbunden ist.
